# EUROPEAN PATENT SPECIFICATION

(11) **EP 3 534 644 B1**
(45) Date of publication and mention of the grant of the patent: **17.03.2021**
(21) Application number: 17864995.0
(22) Date of filing: 26.10.2017
(51) Int. Cl.: H04W 12/04, H04W 36/00, H04L 29/06, H04W 36/12, H04W 36/08

(54) **SOURCE CORE NETWORK NODE, COMMUNICATION TERMINAL AND CORRESPONDING COMMUNICATION METHODS**
QUELLKERNNETZWERKKNOTEN, KOMMUNIKATIONSENDGERÄT UND ENTSPRECHENDE KOMMUNIKATIONSVERFAHREN
NOEUD SOURCE DE RÉSEAU D'ACCÈS RADIO, TERMINAL DE COMMUNICATION ET PROCÉDÉS DE COMMUNICATION CORRESPONDANTS

(30) Priority: 26.10.2016 IN 201611036777; 17.03.2017 IN 201711009359
(43) Date of publication of application: 04.09.2019
(73) Proprietor: NEC Corporation, Tokyo 108-8001 (JP)
(72) Inventor: PRASAD, Anand Raghawa, Tokyo 108-8001 (JP); LAKSHMINARAYANAN, Sivakamy, Perungudi Chennai 600096 (IN); ARUMUGAM, Sivabalan, Perungudi Chennai 600096 (IN); BASKARAN, Sheeba Backia Mary, Perungudi Chennai 600096 (IN); ITO, Hironori, Tokyo 108-8001 (JP); KUNZ, Andreas, Heidelberg 69115 (DE)
(74) Representative: MacDougall, Alan John Shaw
(86) International application number: PCT/JP2017/038823
(87) International publication number: WO 2018/079691

(56) References cited:
- EP-A1- 2 469 752
- WO-A2-01/20925
- JP-A- 2009 049 815
- JP-A- 2011 515 984
- US-A1- 2013 102 270
- 3GPP: "3rd Generation Partnership Project;Technical Specification Group Services and System Aspects;3GPP System Architecture Evolution (SAE):Security Architecture;(Release 8)", 3GPP DRAFT; S3-080603 33401-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia; 20080611, 11 June 2008 (2008-06-11), XP050280784, [retrieved on 2008-06-11]
- "3rd Generation Partnership Project; Technical Specification Group Services and System Aspects; Study on the security aspects of the next generation system (Release 14)", 3GPP DRAFT; S3-161459_33899-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 10 October 2016 (2016-10-10), XP051170480, Retrieved from the Internet: URL:http://www.3gpp.org/ftp/tsg_sa/WG3_Sec urity/TSGS3_84b_San_Diego/Docs/ [retrieved on 2016-10-10]
- "3GPP system architecture evolution (SAE): security architecture (RELEASE 8) TSG-SA WG3#52 S3-080603", Technical specification group services and system aspects (3GPP), June 2008 (2008-06), XP050280784,
- "Huawei, solution for selection of network slice and CN entity", 3GPP TSG-RAN WG3#93 bis R3-162594, 14 October 2016 (2016-10-14), XP051163368,

## Description

### Technical Field

The present invention relates to a source core network node, a communication terminal, and corresponding methods.

### Background Art

LTE (Long Term Evolution), which is defined by 3GPP (3rd Generation Partnership Project) as a wireless communication standard used between a communication terminal and a base station, is in widespread use today. The LTE is a wireless communication standard used to achieve high-speed and high-capacity wireless communications. Further, a packet network called SAE (System Architecture Evolution), EPC (Evolved Packet Core) or the like is defined by 3GPP as a core network to accommodate a wireless network using the LTE.

A communication terminal needs a registration to a core network in order to use communication services using the LTE. As a procedure to register a communication terminal to a core network, an attach procedure is defined by 3GPP. In the attach procedure, an MME (Mobility Management Entity) located in a core network performs authentication or the like of a communication terminal by using identification information of the communication terminal. The MME performs authentication of a communication terminal in collaboration with an HSS (Home Subscriber Server) that manages subscription information or the like. IMEISV (International Mobile Equipment Identity), IMSI (International Mobile Subscriber Identity) or the like is used as identification information of a communication terminal.

Studies have been conducted by 3GPP regarding IoT (Internet of Things) services recently. For IoT services, a large number of terminals that autonomously perform communications without need of user operation (which are referred to hereinafter as IoT terminals) are used. Thus, in order for a service operator to provide IoT services using a large number of IoT terminals, it is desirable to efficiently accommodate a large number of IoT terminals in a mobile network managed by a telecommunications carrier or the like. The mobile network is a network including a wireless network and a core network.

The configuration of a core network to which network slicing is applied is disclosed in Annex B of Non Patent Literature 1. The network slicing is a technique that divides a core network into several slices, each slice supporting each service to be provided, in order to efficiently accommodate a large number of IoT terminals. Further, it is disclosed in Section 5.1 that customization and optimization are required for each sliced network (network slice system).

A system to which network slicing is applied is also called NextGen (Next Generation) System, for example. Further, a wireless network used in the NextGen System may be called NG (Next Generation) RAN (Radio Access Network).

### Citation List

### Non Patent Literature

NPL1: 3GPP TR23.799 V1.0.2 (2016-9)
NPL2: 3GPP TR33.899 V0.5.0 (2016-10)
NPL3: 3GPP TS33.401 V8.0.0 (2008-06) discloses the security architecture for the evolved packet system and the evolved packet core, and the security procedures performed within the evolved packet system including the evolved packet core and the evolved UTRAN.

### Summary of Invention

When a communication terminal moves during communication, the NextGen System needs to perform handover to continue communication of the communication terminal, just like a mobile network with LTE and EPC. However, various functions related to security processing are introduced in the NextGen System, which causes a problem that handover using the security procedure currently defined by 3GPP is not readily applicable to the NextGen System. To be specific, it is discussed in Non-Patent Literature 2 to introduce ARPF (Authentication Credential Repository and Processing Function), AUSF (Authentication Server Function), SEAF (Security Anchor Function), SCMF (Security Context Management Function) and the like to NextGen System.

The present invention is set out in the appended independent claims. In the following, any examples and embodiments not falling within the scope of the claims do not form part of the invention and are provided for illustrative purposes only.

A communication system according to a first example includes a first base station configured to form a communication area where a communication terminal is located, and a second base station configured to form a communication area to which the communication terminal makes handover, wherein the first base station receives a first message containing UE Security Capabilities and related to the handover from the communication terminal, and the second base station receives a second message containing the UE Security Capabilities, performs handover check of the communication terminal based on the UE Security Capabilities, and sends a third message corresponding to the second message based on a result of the handover check.

A base station according to a second example is a base station that forms a communication area where a communication terminal is located, including a communication unit configured to receive a first message containing UE Security Capabilities and related to the handover from a communication terminal, and send a second message containing the UE Security Capabilities to another base station that forms a communication area to which the communication terminal makes handover and performs handover check of the communication terminal based on the UE Security Capabilities.

A control method according to a third example is a control method in a base station that forms a communication area where a communication terminal is located, the method including receiving a first message containing UE Security Capabilities and related to the handover from a communication terminal, and sending a second message containing the UE Security Capabilities to another base station that forms a communication area to which the communication terminal makes handover and performs handover check of the communication terminal based on the UE Security Capabilities.

A communication terminal according to a fourth example is communication terminal that makes handover, including a sending unit configured to send a first message containing UE Security Capabilities and related to the handover to a first base station, and a receiving unit configured to receive a second message from the first base station after a second base station that forms a communication area to which the communication terminal makes handover performs handover check of the communication terminal based on the UE Security Capabilities.

### Advantageous Effects of Invention

According to the present invention, it is possible to provide a communication system, a security device, a communication terminal and a communication method that conduct necessary security procedures when handover is made in NextGen System.

### Brief Description of Drawings

Fig. 1 is a configuration diagram of a communication system according to a first embodiment.
Fig. 2 is a configuration diagram of a communication system according to a second embodiment.
Fig. 3 is a view showing a flow of a handover process according to the second embodiment.
Fig. 4 is a view showing a flow of a handover process according to the second embodiment.
Fig. 5 is a view showing a flow of a handover process according to the second embodiment.
Fig. 6 is a view showing a flow of a handover process according to a third embodiment.
Fig. 7 is a view showing a flow of a handover process according to the third embodiment.
Fig. 8 is a view showing a flow of a handover process according to a fourth embodiment.
Fig. 9 is a view showing a flow of a handover process according to the fourth embodiment.
Fig. 10 is a view showing a flow of a handover process according to the fourth embodiment.
Fig. 11 is a view showing a flow of a handover process according to the fourth embodiment.
Fig. 12 is a view showing a flow of a handover process according to the fourth embodiment.
Fig. 13 is a view showing a flow of a handover process according to a fifth embodiment.
Fig. 14 is a view showing a flow of a handover process according to the fifth embodiment.
Fig. 15 is a configuration diagram of a communication system according to a sixth embodiment.
Fig. 16 is a view showing a flow of a handover process according to the sixth embodiment.
Fig. 17 is a view showing a flow of a handover process according to the sixth embodiment.
Fig. 18 is a view showing a flow of a handover process according to the sixth embodiment.
Fig. 19 is a view showing a flow of a handover process according to the sixth embodiment.
Fig. 20 is a view showing a flow of a handover process according to the sixth embodiment.
Fig. 21 is a view showing a flow of a handover process according to the sixth embodiment.
Fig. 22 is a view showing a flow of a handover process according to the sixth embodiment.
Fig. 23 is a view showing a flow of a handover process according to the sixth embodiment.
Fig. 24 is a configuration diagram of a communication system according to a seventh embodiment.
Fig. 25 is a configuration diagram of a communication system according to the seventh embodiment.

### Description of Embodiments

### First Embodiment

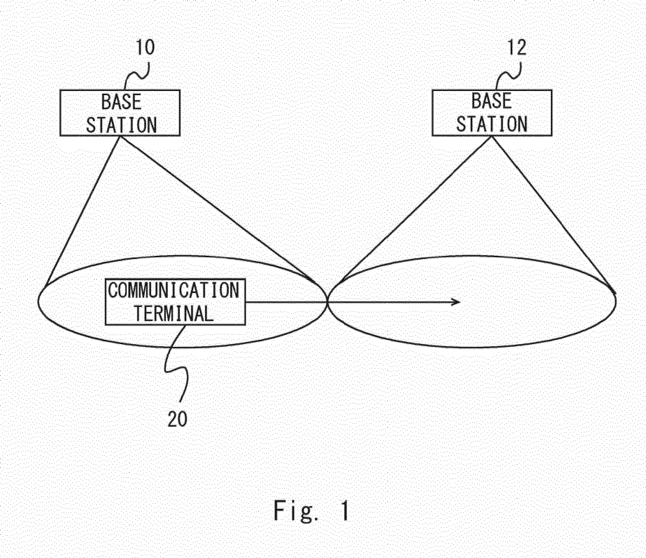

Embodiments of the present invention are described hereinafter with reference to the drawings. A configuration example of a communication system according to a first embodiment is described with reference to Fig. 1. The communication system in Fig. 1 includes a base station 10, a base station 12, and a communication terminal 20.

The base station 10, the base station 12 and the communication terminal 20 may be a computer device that operates when a processor executes a program stored in a memory. The processor may be, for example, a microprocessor, an MPU (Micro Processing Unit) or a CPU (Central Processing Unit). The memory may be a volatile memory, a nonvolatile memory, or a combination of a volatile memory and a nonvolatile memory. The processor executes one or a plurality of programs including a group of instructions for causing a computer to perform algorithms described with reference to the following drawings.

The communication terminal 20 may be a cellular phone terminal, a smart phone terminal, an IoT terminal or the like.

Each of the base station 10 and the base station 12 forms a communication area. The communication terminal 20 wirelessly communicates with the base station 10 in the communication area formed by the base station 10, and wirelessly communicates with the base station 12 in the communication area formed by the base station 12. Fig. 1 shows that the communication terminal 20 moves from the communication area formed by the base station 10 to the communication area formed by the base station 12. Specifically, Fig. 1 shows that the communication terminal 20 makes a handover from the communication area formed by the base station 10 to the communication area formed by the base station 12.

When the communication terminal 20 makes a handover, the base station 10 receives a message containing UE Security Capabilities from the communication terminal 20. The base station 10 may send the received message containing the UE Security Capabilities to the base station 12. The base station 10 may send the UE Security Capabilities via an interface or a reference point set between the base station 10 and the base station 12. Alternatively, the base station 10 may send the UE Security Capabilities to the base station 12 via a higher-level device that controls the base station.

The UE Security Capabilities may be a set of identification information corresponding to algorithm information to be used for encryption and integrity performed in a UE, which is the communication terminal 20.

When the base station 12 receives the message related to a handover containing the UE Security Capabilities, it performs a handover check of the communication terminal 20 based on the UE Security Capabilities. The handover check may be referred to as a check. The handover check using the UE Security Capabilities may determine whether the UE Security Capabilities contain algorithm information to be used, for example, for encryption and integrity performed by the base station 12. The message related to the handover received by the base station 12 may further contain NSSAI. In this case, the base station 12 performs the handover check based on the NSSAI.

The base station 12 sends a message corresponding to the received message containing the UE Security Capabilities based on a result of the handover check. To be specific, when, as a result of the handover check using the UE Security Capabilities, the base station 12 allows the communication terminal 20 to communicate with the base station 12, the base station 12 sends, to the base station 10, a message requesting a handover of the communication terminal 20.

As described above, the base station 12 performs the handover check using the UE Security Capabilities when making a handover. The UE Security Capabilities contain information related to a plurality of algorithms used, for example, for different encryption and integrity. The base station 12 performs the handover check using the UE Security Capabilities and can thereby determine whether or not to continue communication after the communication terminal 20 makes a handover to its own station.

Thus, when the base station 12 is connected to, for example, different network slices (or network slice systems), the base station 12 can determine whether the communication terminal 20 that has been moved by the handover can continue communication via its own station.

### Second Embodiment

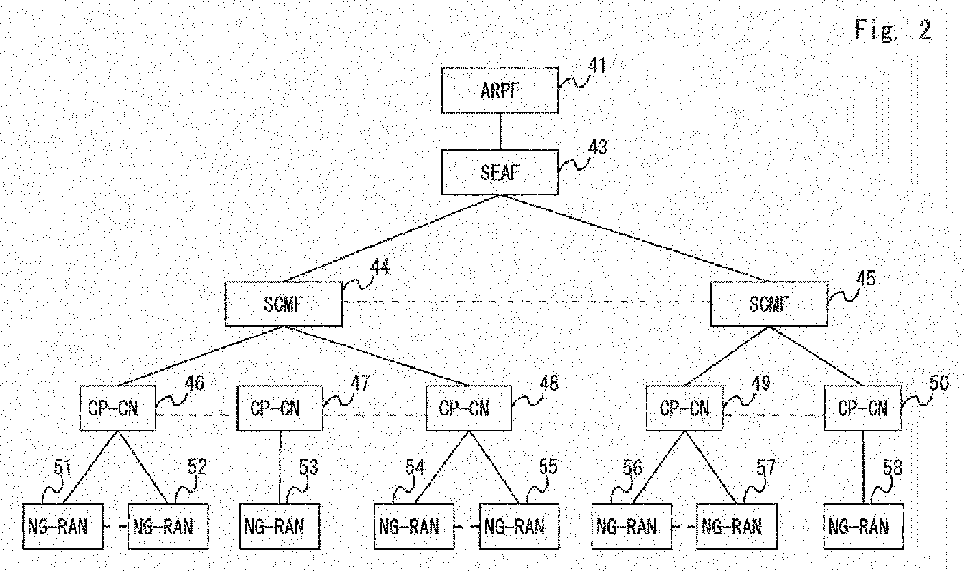

A configuration example of a communication system according to a second embodiment is described with reference to Fig. 2. The communication system in Fig. 2 includes an ARPF entity (which is referred to hereinafter as ARPF) 41, an SEAF entity (hereinafter as SEAF) 43, SCMF entities (hereinafter as SCMF) 44 and 45, CP(C-Plane)-CN(Core Network) 46 to 50, and NG-RAN 51 to 58.

The ARPF 41, the SEAF 43, the SCMF 44 and 45, and the CP-CN 46 to 50 form a core network. The NG-RAN 51 to 58 form a radio access network. The NG-RAN may be a base station (gNB: Next Generation NodeB) used in the NextGen System, for example.

Each of the entities shown in Fig. 2 may include a plurality of functions. For example, although the ARPF 41 is a different entity from the SEAF 43 in Fig. 2, a single entity that executes the ARPF and the SEAF may be used instead.

The ARPF entity is a node device that executes the ARPF. The ARPF is a function that performs authentication as to whether a UE (User Equipment), which corresponds to the communication terminal 20, can connect to the NextGen System. The ARPF 41 generates a security key to be used for authentication and holds the generated security key.

The SEAF entity is a node device that executes the SEAF, and the SCMF entity is a node device that executes the SCMF. The SEAF and SCMF are functions that perform authentication as to whether a UE can connect to a core network where network slicing is applied.

The CP-CN 46 to 48 include an MM entity that performs Mobility Management (MM) and an SM entity that performs Session Management (SM).

To be specific, the MM may be registering a UE or a user who manages a UE into a mobile network, supporting reachability that enables mobile terminated communication, detecting an unreachable UE, allocating a network function related to C(Control)-Plane and U(User)-Plane, and restricting mobility, and the like.

Further, the SM is making setting of IP connectivity or non-IP connectivity for a UE. In other words, the SM may be managing or controlling connectivity of U-Plane.

In Fig. 2, a dotted line between the NG-RANs and a dotted line between the CP-CNs indicate that direct communication is possible between the NG-RANs and between the CP-CNs. In other words, an interface or a reference point is set between the NG-RANs and between the CP-CNs.

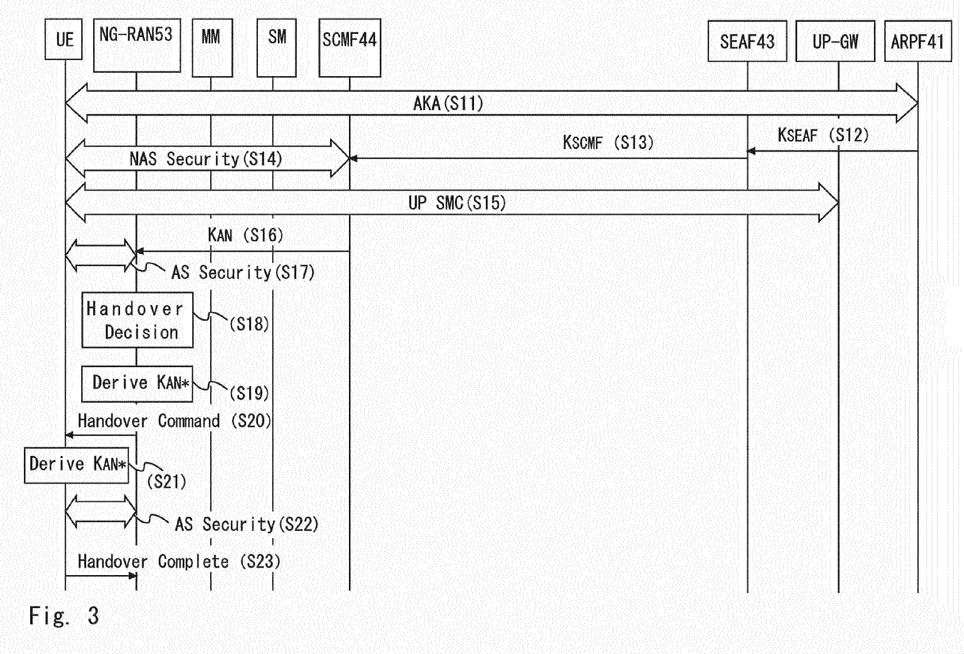

A handover process in the NG-RAN 53 (INTRA NG RAN HANDOVER) is described hereinafter with reference to Fig. 3. It is assumed that, in the NG-RAN 53, one cell is divided into a plurality of sectors. INTRA NG RAN HANDOVER may be handover that occurs as the UE moves between sectors, for example. Further, in Fig. 3, the handover process is described using MM and SM, instead of CP-CN. Further, a UP-GW is a gateway that is used for transmitting user plane data. The same applies in the following drawings.

First, AKA (Authentication and Key Agreement) is performed between the UE and the ARPF 41. As a result of performing AKA between the UE and the ARPF 41, the UE and the ARPF 41 can have a security key K in common.

Next, the ARPF 41 sends a security key K_{SEAF} derived from the security key K to the SEAF 43 (S12). The SEAF 43 then sends a security key K_{SCMF} derived from the security key K_{SEAF} to the SCMF 44 (S13).

Then, NAS (Non-Access Stratum) Security processing is performed between the UE and the SCMF 44. For example, the NAS Security processing may be establishing a secure communication channel where encryption of C-Plane data or the like can be done between the UE and the SCMF 44.

Then, UP SMC (Security Mode Command) processing is performed between the UE and the UP-GW. For example, the UP SMC processing may be establishing a secure communication channel where encryption of U-Plane data or the like can be done between the UE and the UP-GW.

After that, the SCMF 44 sends a security key K_{AN} derived from the security key K_{SCMF} to the NG-RAN 53 (S16). Then, AS Security processing is performed between the UE and the NG-RAN 53 (S17). For example, the AS Security processing may be establishing a secure communication channel where encryption of data or the like can be done between the UE and the NG-RAN 53.

Then, the NG-RAN 53 makes the handover decision (S18). The NG-RAN 53 then refreshes the held security key K_{AN} (S19). In other words, the NG-RAN 53 derives a security key K_{AN}* from the security key K_{AN}. For example, the NG-RAN 53 updates the security key K_{AN} and derives the security key K_{AN}*. The NG-RAN 53 further derives, from the security key K_{AN}*, a security key to be used for integrity and encryption related to RRC message and user plane data.

The NG-RAN 53 then sends a Handover Command message to the UE (S20). The Handover Command message may contain parameters, algorithm information or the like used when deriving the security key K_{AN}*, and parameters, algorithm information or the like used when deriving the security key to be used for integrity and encryption, for example.

Then, the UE derives the security key K_{AN}* by using the parameters or the like contained in the Handover Command message (S21). The UE further derives, from the security key K_{AN}*, the security key to be used for integrity and encryption related to RRC message and user plane data.

After that, AS Security processing is performed between the UE and the NG-RAN 53 (S22). When the AS Security processing in Step S22 is completed, the UE sends a Handover Complete message to the NG-RAN 53 (S23).

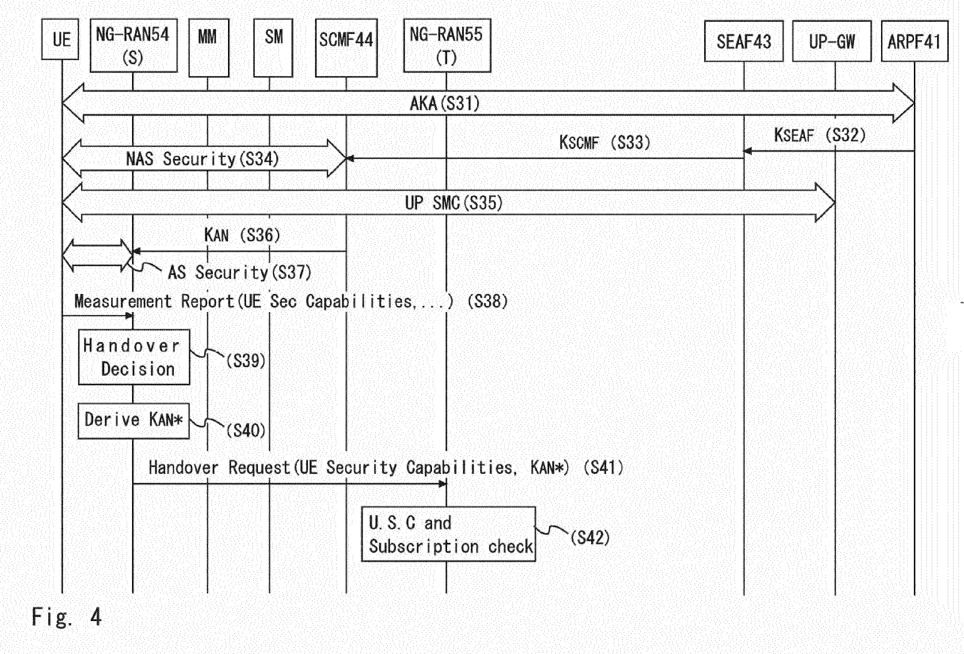

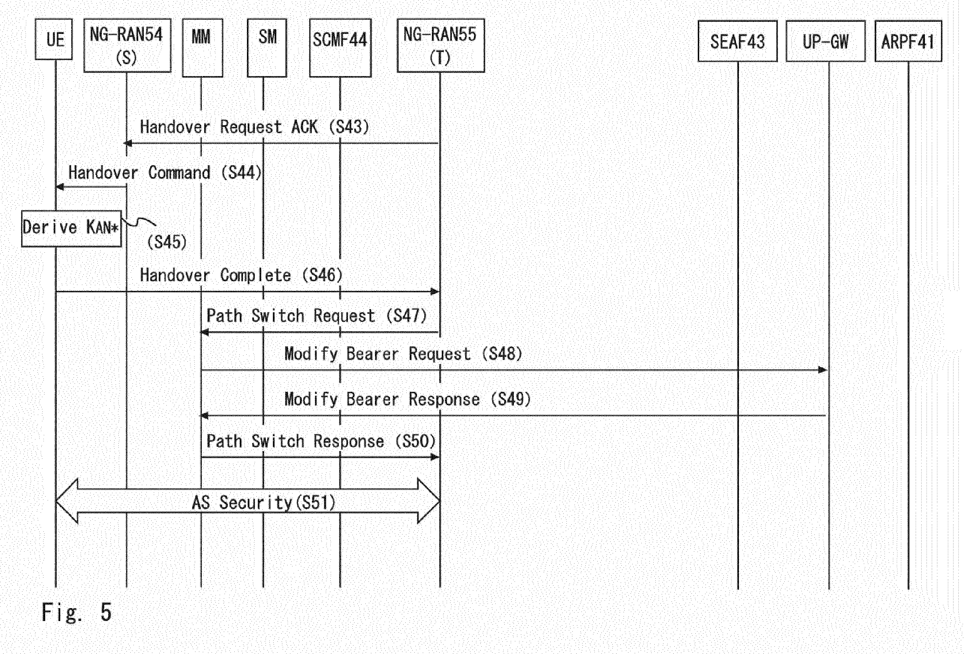

A handover process between the NG-RAN 54 and the NG-RAN 55 (INTER NG RAN HANDOVER) is described hereinafter with reference to Figs. 4 and 5. The handover process in Figs. 4 and 5 shows a handover process within the same CP-CN (INTRA CP-CN HANDOVER). Further, Figs. 4 and 5 are based on the assumption that the NG-RAN 54 and the NG-RAN 55 directly communicate with each other via an interface corresponding to the X2 interface defined between eNBs by 3GPP.

Further, Figs. 4 and 5 show the handover process performed when the UE moves from the NG-RAN 54 to the NG-RAN 55. The symbol "(S)" after the word "NG-RAN 54" indicates Source, which indicates the NG-RAN from which the UE is handed over. The symbol "(T)" after the word "NG-RAN 55" indicates Target, which indicates the NG-RAN to which the UE is handed over.

Steps S31 to S37 in Fig. 4 are substantially the same as Steps S11 to S17 in Fig. 3, and therefore detailed description thereof is omitted. Next, the UE sends a Measurement Report message containing the UE Security Capabilities to the NG-RAN 54 (S38). The Measurement Report message may contain information related to a result of measuring the radio field intensity or the like of the message sent from the NG-RAN 55, for example.

Then, the NG-RAN 54 evaluates the Measurement Report and makes the handover decision (S39). Next, the NG-RAN 53 refreshes the held security key K_{AN} (S40). In other words, the NG-RAN 54 derives the security key K_{AN}* from the security key K_{AN}. For example, the NG-RAN 54 updates the security key K_{AN} and derives the security key K_{AN}*. The NG-RAN 54 further derives, from the security key K_{AN}*, the security key to be used for integrity and encryption related to RRC message and user plane data.

Then, the NG-RAN 54 sends a Handover Request message to the NG-RAN 55 via an interface corresponding to the X2 interface (S41). The Handover Request message contains the UE Security Capabilities and the security key K_{AN}* related to the UE.

After that, the NG-RAN 55 checks the UE Security Capabilities (U.S.C) and Subscription of the UE (S42). In other words, the NG-RAN 55 performs handover check by using the UE Security Capabilities and the Subscription. Specifically, the NG-RAN 55 determines whether the UE can access the network slice via the NG-RAN 55.

Referring then to Fig. 5, when the UE qualifies for accessing the slice via the new NG RAN, which is the NG-RAN 55, the NG-RAN 55 sends a Handover Request Ack message to the NG-RAN 54 (S43).

The NG-RAN 54 then sends a Handover Command message to the UE (S44). The Handover Command message may contain the security key K_{AN}*, parameters, algorithm information or the like used when deriving the security key to be used for integrity and encryption and the like, for example.

Then, the UE derives the security key K_{AN}* by using the parameters or the like contained in the Handover Command message (S45). The UE further derives, from the security key K_{AN}*, the security key to be used for integrity and encryption related to RRC message and user plane data.

After that, the UE sends a Handover Complete message to the NG-RAN 55 (S46). The NG-RAN 55 then sends a Path Switch Request message to the MM (S47).

The MM then sends a Modify Bearer Request message to the UP-GW (S48). The UP-GW then sends a Modify Bearer Response message to the MM (S49). As a result of performing the processing in Steps S48 and S49, a bearer related to U-Plane data is updated. The MM then sends a Path Switch Response message to the NG-RAN 55 (S50).

After that, AS Security processing is performed between the UE and the NG-RAN 55 (S51).

As described above, in the second embodiment, handover is made in the state where a secure communication channel is established between the UE and the handover target NG-RAN 55.

### Third Embodiment

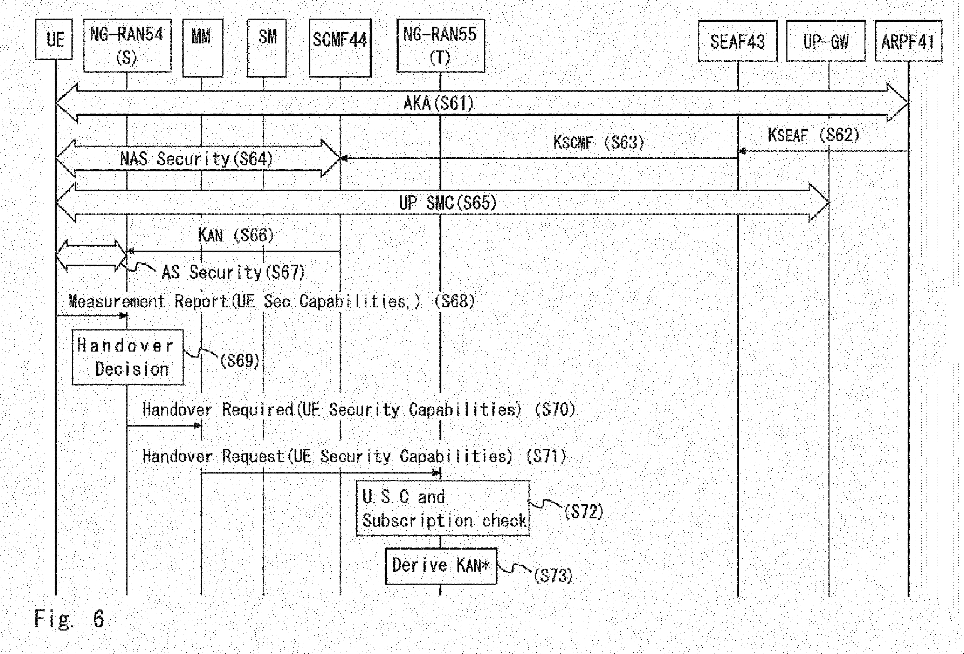

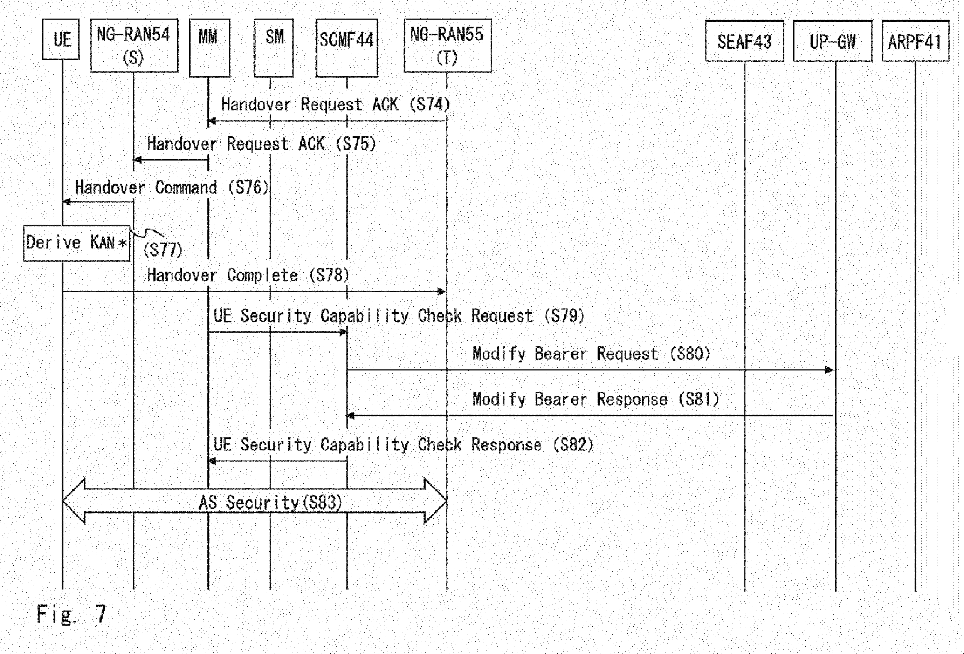

A handover process between the NG-RAN 54 and the NG-RAN 55 (INTER NG RAN HANDOVER) is described hereinafter with reference to Figs. 6 and 7. The handover process in Figs. 6 and 7 shows a handover process within the same CP-CN (INTRA CP-CN HANDOVER). Further, Figs. 6 and 7 are based on the assumption that the NG-RAN 54 and the NG-RAN 55 communicate with each other via the CP-CN 48. The description of Figs. 6 and 7 uses MM and SM as the CP-CN 48.

Steps S61 to S69 in Fig. 6 are substantially the same as Steps S31 to S39 in Fig. 4, and therefore detailed description thereof is omitted.

Then, the NG-RAN 54 sends a Hanover Required message to the MM (S70). The Hanover Required message contains the UE Security Capabilities. Further, the MM sends a Handover Request message to the NG-RAN 55 (S71). The Handover Request message contains the UE Security Capabilities.

The NG-RAN 55 then checks the UE Security Capabilities (U.S.C) and Subscription of the UE (S72). When the UE qualifies for accessing the slice via the NG-RAN 55, the NG-RAN 55 refreshes the held security key K_{AN} (S73). In other words, the NG-RAN 55 derives the security key K_{AN}* from the security key K_{AN}. For example, the NG-RAN 55 updates the security key K_{AN} and derives the security key K_{AN}*. The NG-RAN 55 further derives, from the security key K_{AN}*, the security key to be used for integrity and encryption related to RRC message and user plane data.

The NG-RAN 55 may receive the security key K_{AN} related to the UE in advance, for example. For example, in Step S66, the SCMF 44 may send the security key K_{AN} to the NG-RAN 55 in addition to the NG-RAN 54. Alternatively, the security key K_{AN} may be contained in the message sent in Steps S70 and S71.

Then, the NG-RAN 55 sends a Handover Request ACK message to the NG-RAN 54 via the MM (S74, S75). Steps S76 to S78 are substantially the same as Steps S44 to S46 in Fig. 5, and therefore detailed description thereof is omitted.

After that, the MM sends a UE Security Capability Check Request message to the SCMF 44 (S79). The SCMF 44 then sends a Modify Bearer Request message to the UP-GW (S80). The UP-GW sends a Modify Bearer Response message to the SCMF 44 (S81). The SCMF 44 then sends a UE Security Capability Check Response message to the MM (S82). Step S83 is substantially the same as Step S51 in Fig. 5, and therefore detailed description thereof is omitted.

As described above, in the third embodiment, just like in the second embodiment, handover is made in the state where a secure communication channel is established between the UE and the handover target NG-RAN 55.

### Fourth Embodiment

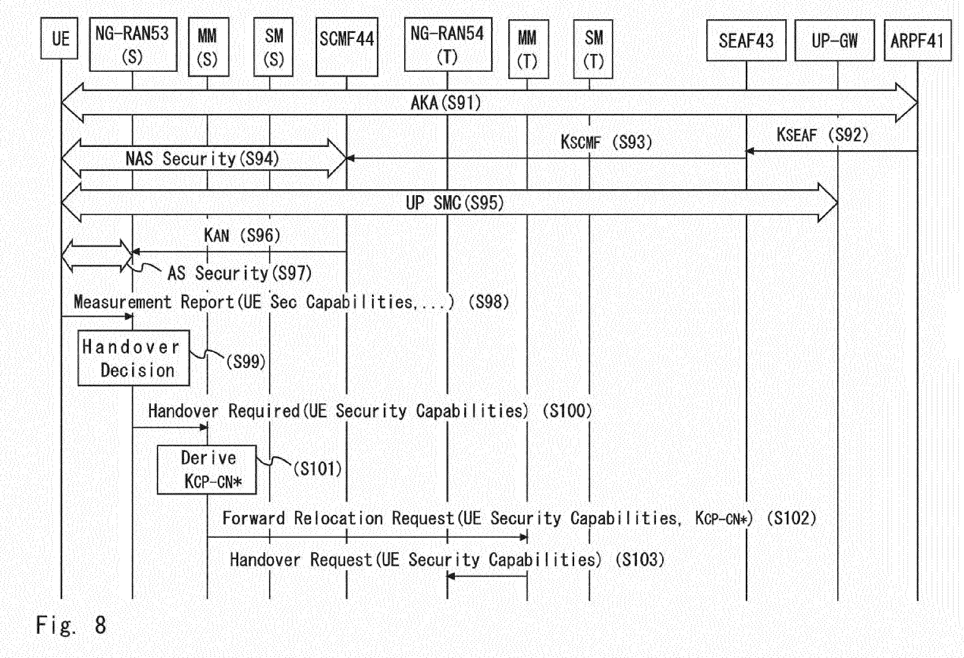

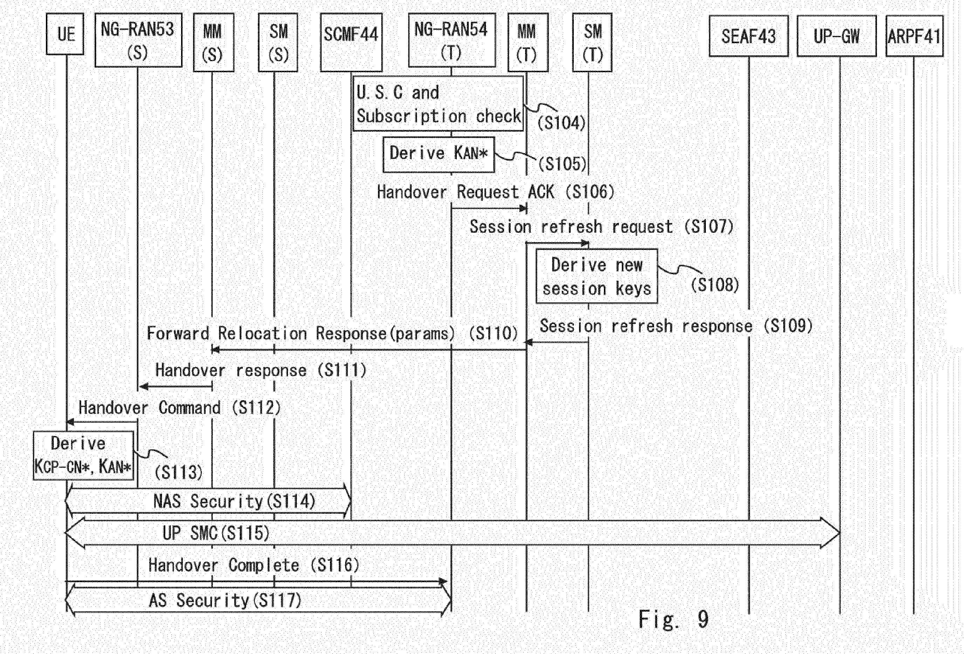

A handover process between the NG-RAN 53 and the NG-RAN 54 (INTER NG RAN, INTER CP-CN, INTRA SCMF HANDOVER) is described hereinafter with reference to Figs. 8 and 9. The handover process in Figs. 8 and 9 shows a handover process involving a change from the CP-CN 47 to the CP-CN 48. The description of Figs. 8 and 9 uses MM(S) and SM(S) as the CP-CN 47, and MM(T) and SM(T) as the CP-CN 48.

Steps S91 to S100 are substantially the same as Steps S61 to S70 in Fig. 6, and therefore detailed description thereof is omitted. Then, the MM(S) derives a security key K_{CP=CN}* (S101). For example, it is assumed that the MM(S) receives a security key K_{CP-CN} or a security key K_{SCMF} related to the UE in advance. For example, the MM(S) may receive, from the SCMF 44, the security key K_{CP-CN} derived in the SCMF 44 at arbitrary timing.

Next, the MM(S) sends a Forward Relocation Request message to the MM(T) (S102). The Forward Relocation Request message contains the UE Security Capabilities and the security key K_{CP=CN}*. The MM(T) then sends a Handover Request message to the NG-RAN 54 (S103). The Handover Request message contains the UE Security Capabilities. Steps S104 and S105 are substantially the same as Steps S72 and S73 in Fig. 6, and therefore detailed description thereof is omitted.

Then, the NG-RAN 54 sends a Handover Request ACK message to the MM(T). The Handover Request ACK message contains the UE Security Capabilities and the security key K_{AN}*.

Then, the MM(T) sends a Session Refresh Request message to the SM(T) (S107). The SM(T) then derives new session keys (S108). The session keys may be security keys used for integrity and encryption related to U-Plane, for example.

Then, the SM(T) sends a Session Refresh Response message to the MM(T) (S109). The MM(T) then sends a Forward Relocation Response message to the MM(S) (S110). Steps S111 and S112 are substantially the same as Steps S75 and S76 in Fig. 7, and therefore detailed description thereof is omitted.

Next, the UE derives the security key K_{CP-CN}*, the security key K_{AN}*, NAS keys, security keys used for integrity and encryption related to RRC message and user plane date, and session keys (S113).

Then, the UE performs NAS Security processing with the SCMF 44 (S114). Further, the UE performs UP SMC processing with the UP-GW (S115). The UE then sends a Handover Complete message to the NG-RAN 54 (S116). The UE then performs AS Security processing with the NG-RAN 54 (S117).

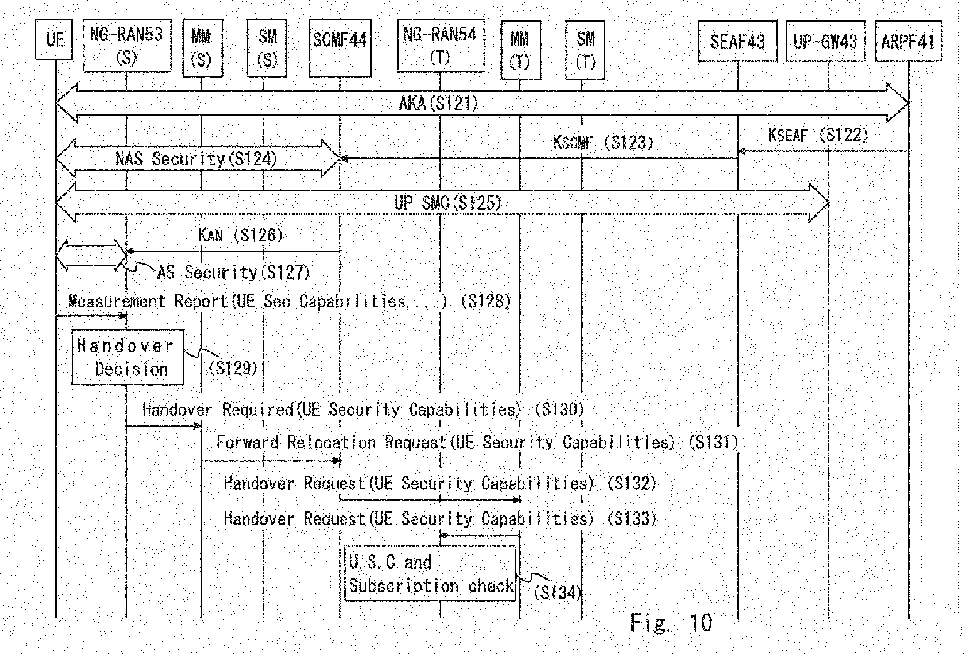

A handover process between the NG-RAN 53 and the NG-RAN 54 (INTER NG RAN, INTER CP-CN, INTRA SCMF HANDOVER), which is different from that shown in Figs. 8 and 9, is described hereinafter with reference to Figs. 10 to 12.

In Figs. 10 to 12, a process in the case of not using an interface between the CP-CN 47 and the CP-CN 48 is described.

Steps S121 to S130 are substantially the same as Steps S91 to S100 in Fig. 8, and therefore detailed description thereof is omitted. Next, the MM(S) sends a Forward Relocation Request message to the SCMF 44 (S131). The Forward Relocation Request message contains the UE Security Capabilities. Then, the SCMF 44 sends the Handover Request message to the NG-RAN 54 via the MM(T) (S132, S133). The Handover Request message contains the UE Security Capabilities. Steps S134 to S136 are substantially the same as Steps S104 to S106 in Fig. 9, and therefore detailed description thereof is omitted.

Then, the MM(T) derives the security key K_{CP-CN}* (S137). Steps S138 to S140 are substantially the same as Steps S107 to S109 in Fig. 9, and therefore detailed description thereof is omitted. Then, the MM(T) sends a Handover Request ACK message to the SCMF 44 (S141). The SCMF 44 then sends a Forward Relocation Response message to the MM(S) (S142).

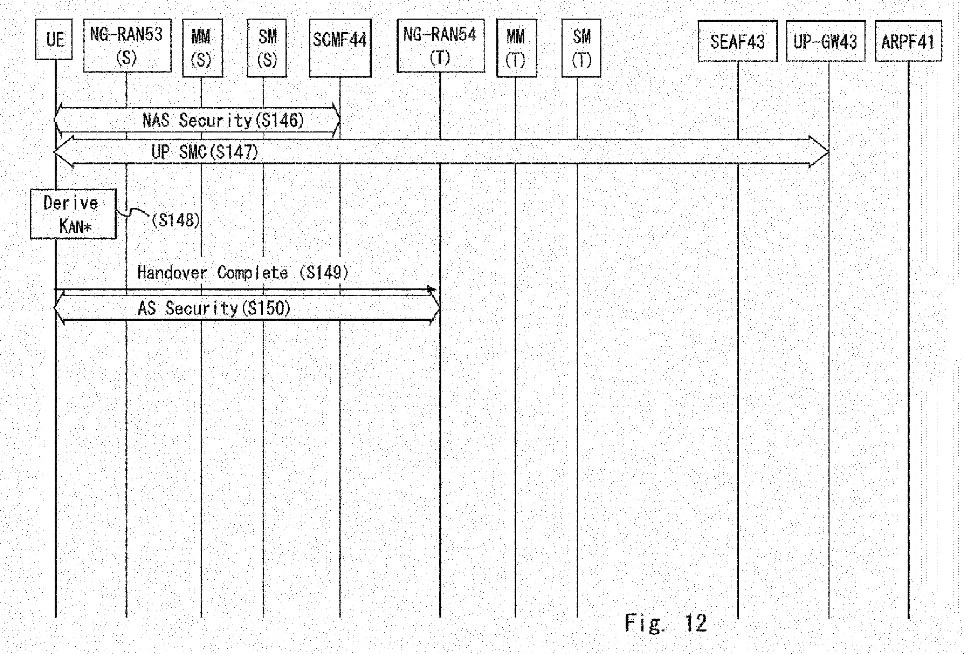

Steps S143 to S150 are substantially the same as Steps S111 to S117 in Fig. 9, and therefore detailed description thereof is omitted. Note that, in Fig. 12, the UE derives the security key K_{AN} after the UP SMC processing.

As described above, in the fourth embodiment, just like in the second and third embodiments, handover is made in the state where a secure communication channel is established between the UE and the handover target NG-RAN 54.

### Fifth Embodiment

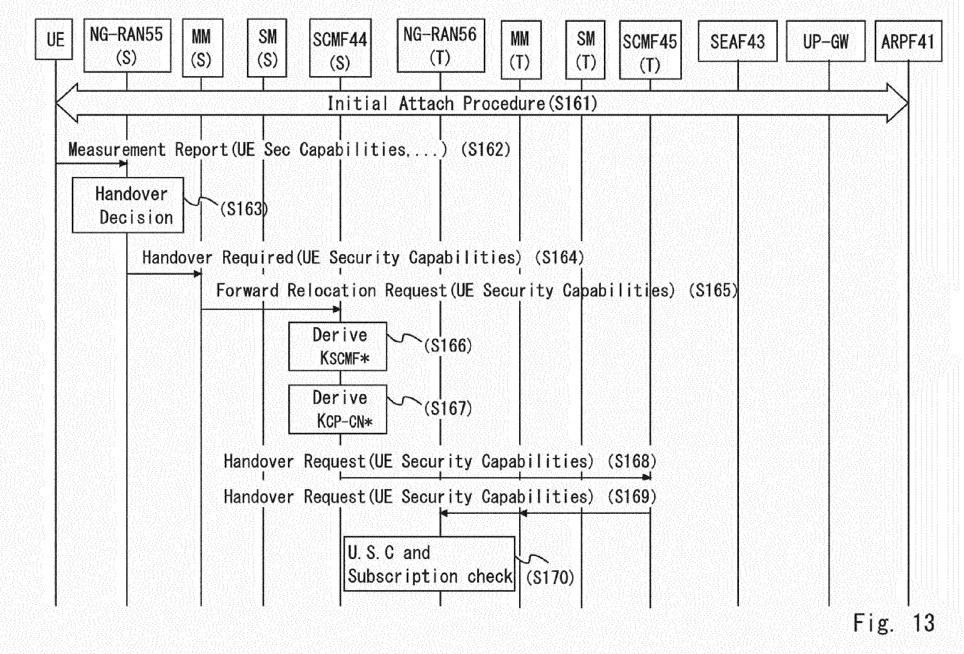

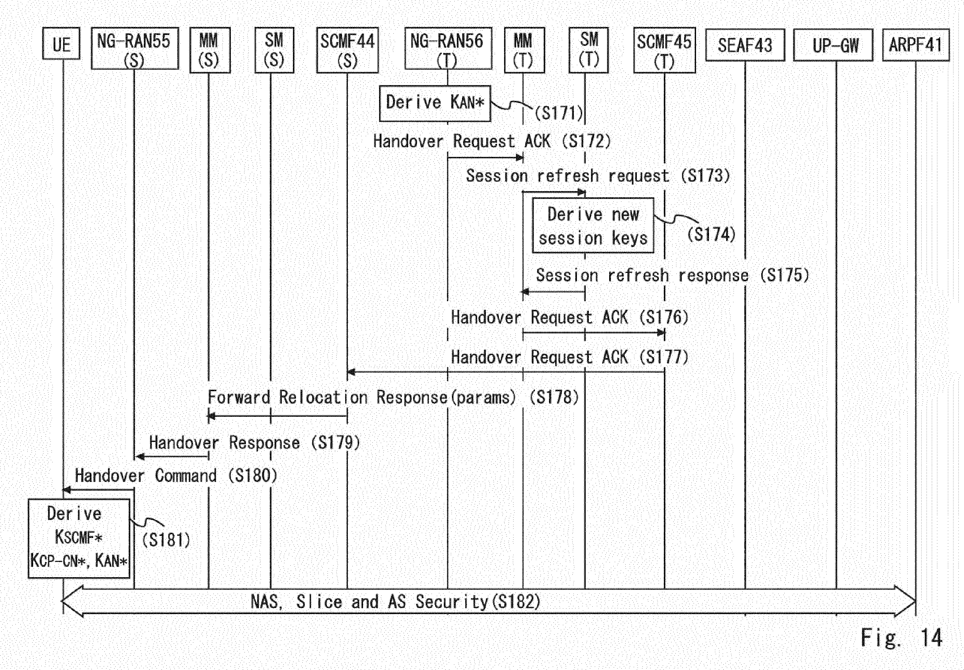

A handover process between the NG-RAN 55 and the NG-RAN 56 (INTER NG RAN, INTER CP-CN, INTER SCMF HANDOVER) is described hereinafter with reference to Figs. 13 and 14. The handover process in Figs. 13 and 14 shows a handover process involving a change from the SCMF 44 to the SCMF 45. The description of Figs. 13 and 14 uses MM(S) and SM(S) as the CP-CN 48 and MM(T) and SM(T) as the CP-CN 49.

First, an initial attach procedure is performed between the UE and the ARPF 41 (S161). The initial attach procedure corresponds to Steps S31 to S37 in Fig. 4, for example. Further, Steps S162 to S165 are substantially the same as Steps S128 to S131 in Fig. 10, and therefore detailed description thereof is omitted.

After that, the SCMF 44 derives the security key K_{SCMF}* (S166). Further, the SCMF 44 derives the security key K_{CP-CN}* by using the security key K_{SCMF}* (S167). The SCMF 44 then sends a Handover Request message to the NG-RAN 56 via the SCMF 45 and the MM(T) (S168, S169). The Handover Request message contains the UE Security Capabilities.

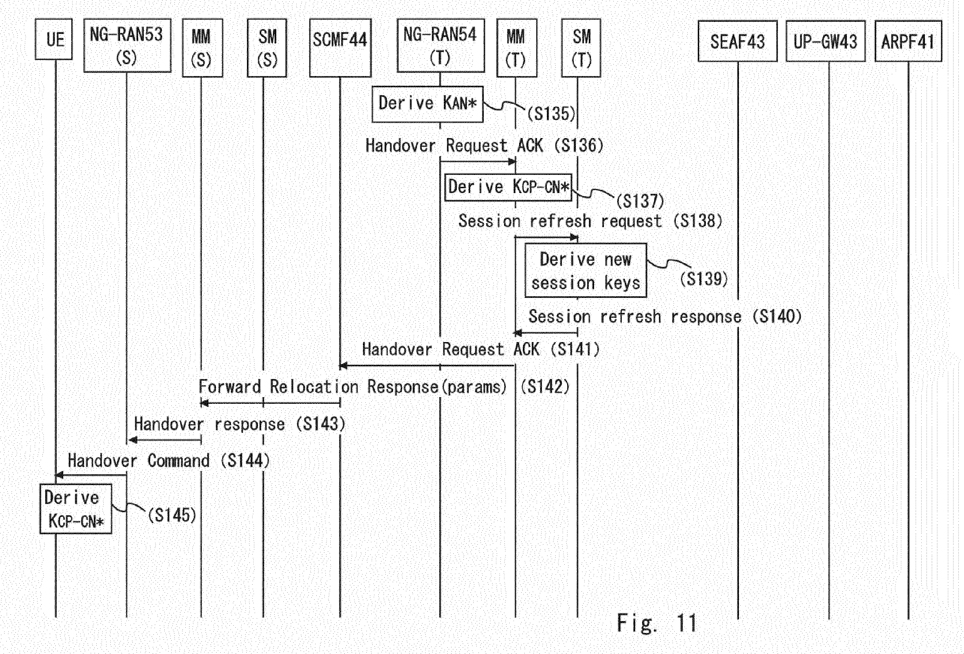

Steps S170 to S172 are substantially the same as Steps S134 to S136 in Figs. 10 and 11, and therefore detailed description thereof is omitted. Further, Steps S173 to S175 are substantially the same as Steps S138 to S140 in Fig. 11, and therefore detailed description thereof is omitted.

Then, the MM(T) sends a Handover Request ACK message to the SCMF 44 via the SCMF 45 (S176, S177). Steps S178 to S182 are substantially the same as Steps S142 to S150 in Figs. 11 and 12, and therefore detailed description thereof is omitted.

As described above, in the fifth embodiment, just like in the second to fourth embodiments, handover is made in the state where a secure communication channel is established between the UE and the handover target NG-RAN 56.

### Sixth Embodiment

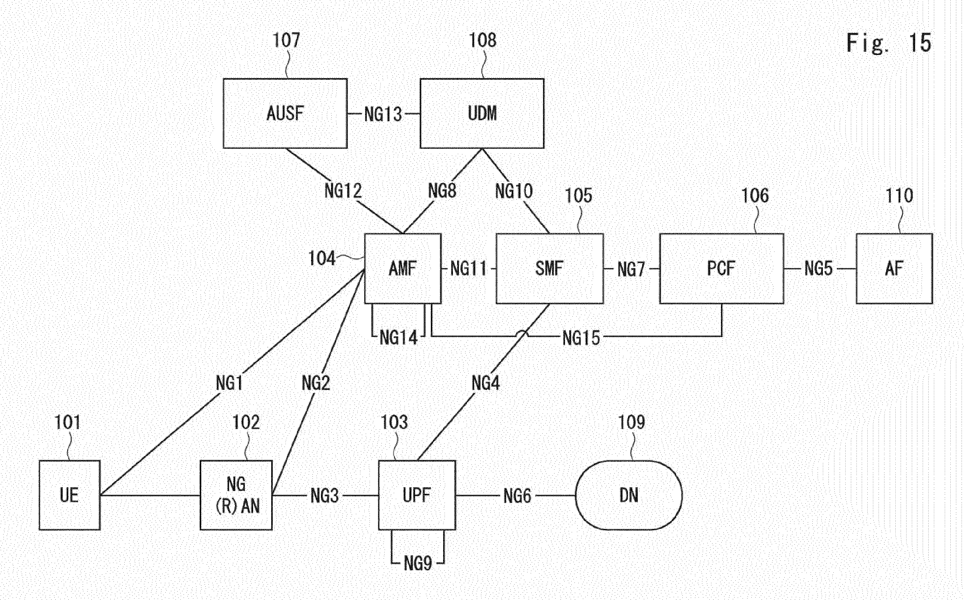

A configuration example of a communication system according to a sixth embodiment is described hereinafter with reference to Fig. 15. The communication system in Fig. 15 includes a UE (User Equipment) 101, an NG(R)AN ((Radio) Access Network) 102, a UPF (User Plane Function) entity 103 (which is hereinafter referred to as UPF 103), an AMF (Access and Mobility Management Function) entity 104 (hereinafter referred to as AMF 104), an SMF (Session Management Function) entity 105 (hereinafter referred to as SMF 105), a PCF (Policy Control Function) entity 106 (hereinafter referred to as PFC 106), an AUSF (Authentication Server Function) entity 107 (hereinafter referred to as AUSF 107), a UDM (Unified Data Management) 108, a DN (Data Network) 109, and an AF (Application Function) entity 110 (hereinafter referred to as AF110).

The UPF 103, the AMF 104, the SMF 105, the PCF 106, the AUSF 107, and the UDM 108 form a 5GC (5G Core). The 5GC is a core network in the NextGen System.

The NG(R)AN 102 corresponds to the NG-RAN 51 to the NG-RAN 58 in Fig. 2. The AMF 104 and the SMF 105 correspond to the CP-CN 46 to the CP-CN 50 in Fig. 2. Further, as shown in Fig. 15, NG 1 to NG 15 interfaces are set up between devices or between functions in the communication system of Fig. 15.

The AUSF 107 is a function that performs authentication as to whether the UE 101 can connect to the 5GC, for example. The AUSF 107 generates a security key to be used for authentication and holds the generated security key. The UDM 108 manages subscriber data (UE Subscription or Subscription information). Further, for example, the UDM 108 may be a node device that executes ARPF. The UPF 103 is a node device that transmits U-Plane data.

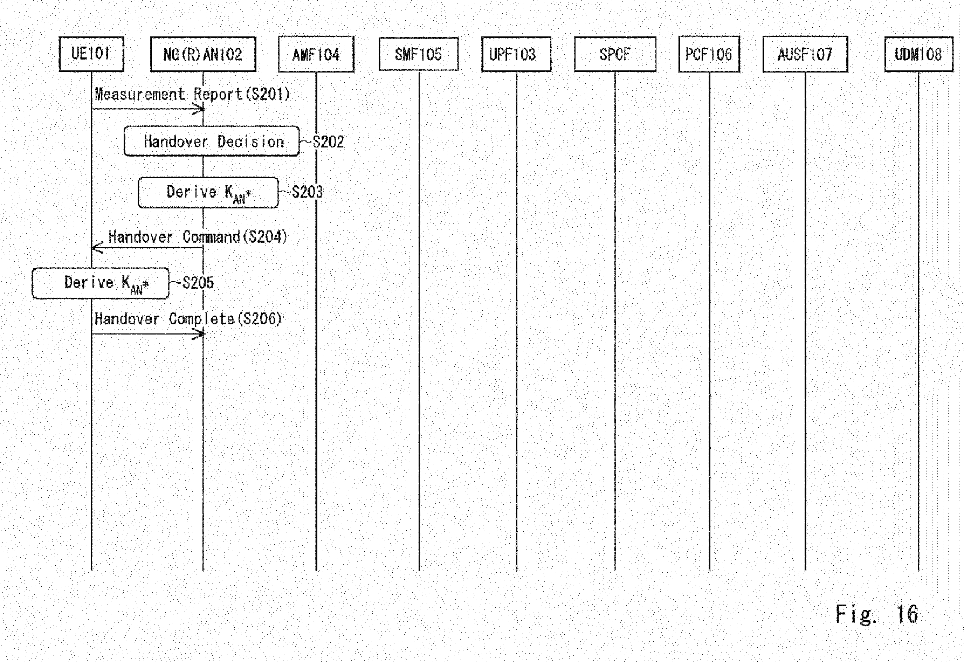

A handover process in the NG(R)AN 102 (INTRA NG RAN HANDOVER) is described hereinafter with reference to Fig. 16. Fig. 16 shows a handover process within the NG(R)AN 102 in the communication system shown in Fig. 15. Further, Fig. 16 shows a handover process performed between the UE 101 and the NG(R)AN 102. Thus, Steps S202 to S206, which are performed after the UE 101 sends a Measurement Report message to the NG(R)AN 102 in Step S201, are substantially the same as Steps S18 to 21 and Step S23 in Fig. 3, and therefore detailed description thereof is omitted.

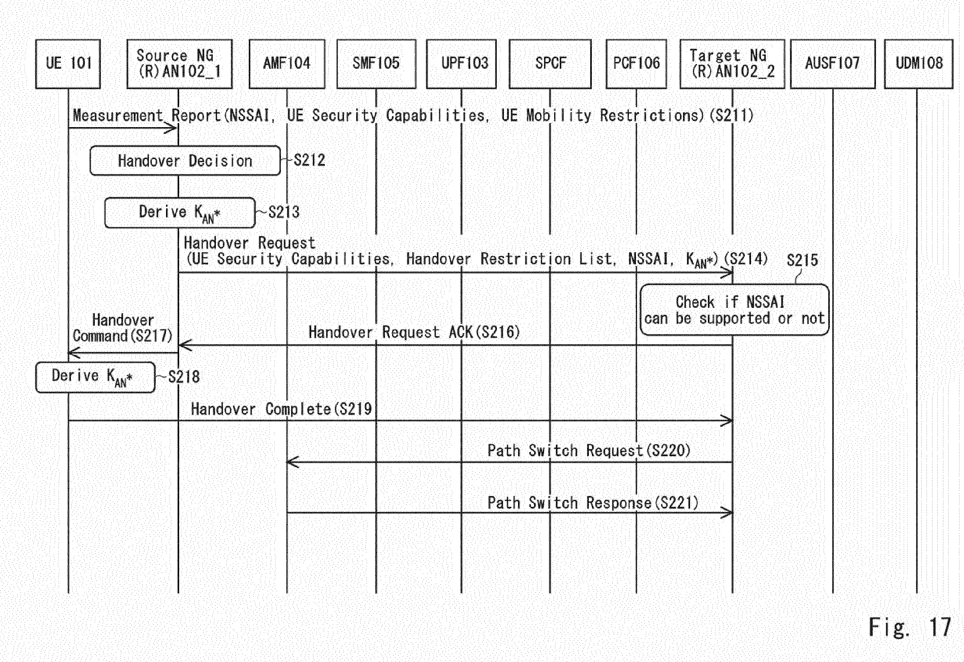

A handover process between an NG(R)AN 102_1 and an NG(R)AN 102_2 (Inter NG RAN handover with Xn interface) is described hereinafter with reference to Fig. 17. The NG(R)AN 102_1 is an NG(R)AN before the UE 101 moves (Source NG(R)AN) (which may be referred to a Source gNB), and the NG(R)AN 102_2 is an NG(R)AN after the UE 101 moves (Target NG(R)AN) (which may be referred to a Target gNB). The Xn interface is an interface set up between the NG(R)AN 102_1 and the NG(R)AN 102_2.

First, if handover is required, the UE sends, to the NG(R)AN 102_1, the Measurement Report message containing NSSAI (Network Slice Selection Assistance Information), UE Security Capabilities, and UE Mobility Restrictions (S211). The NSSAI is information for identifying a core network that provides services to be used by the UE 101, for example. Network slicing is applied to the 5GC, and it is divided for each service to be provided. Each divided network may be called a network slice.

Next, the NG(R)AN 102_1 evaluates the Measurement Report and makes the handover decision (S212). Then, the NG(R)AN 102_1 refreshes the held security key K_{AN} (S213). In other words, the NG(R)AN 102_1 derives the security key K_{AN}* from the security key K_{AN}. For example, the NG(R)AN 102_1 updates the security key K_{AN} and derives the security key K_{AN}*.

Then, the NG(R)AN 102_1 sends the Handover Request message to the NG(R)AN 102_2 via the Xn interface (S214). The Handover Request message contains the UE Security Capabilities, Handover Restriction List, the NSSAI and the security key K_{AN}* related to the UE.

Then, the NG(R)AN 102_2 checks whether the NSSAI is supported or not (S215). In other words, the NG(R)AN 102_2 performs handover check by using the UE Security Capabilities and the NSSAI. Specifically, the NG(R)AN 102_1 determines whether the UE can access the network slice via the NG(R)AN 102_2. In other words, the Source gNB checks whether the Target gNB supports services required by the UE and thereby uses information containing the NSSAI received from the UE for the handover Decision.

Steps S216 to S221 are substantially the same as Steps S43 to S47 and S50 in Fig. 5, and therefore detailed description thereof is omitted.

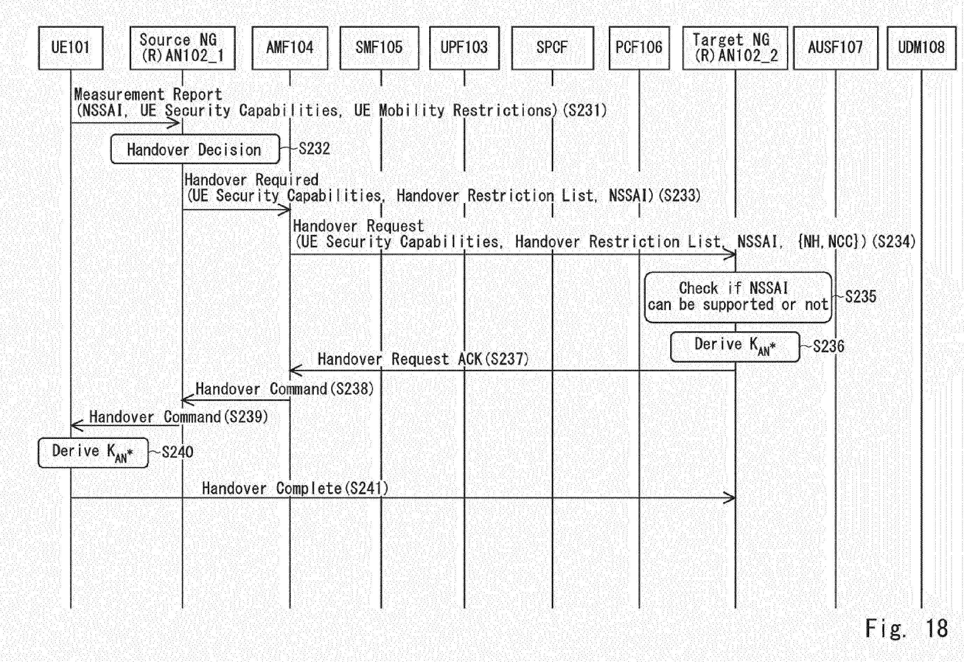

A handover process between the NG(R)AN 102_1 and the NG(R)AN 102_2 (Intra vAMF, Intra vSMF, Inter NG(R)AN handover without Xn interface) is described hereinafter with reference to Fig. 18.

Steps S231 and S232 are substantially the same as Steps S211 and S212 in Fig. 17, and therefore detailed description thereof is omitted.

Then, the NG(R)AN 102_1 sends a Hanover Required message to the AMF 104 (S233). The Handover Required message contains the UE Security Capabilities, the Handover Restriction List, the NSSAI, and {NH,NCC}. Further, the AMF 104 sends a Handover Request message to the NG(R)AN 102_2 (S234). The Handover Request message contains the UE Security Capabilities, the Handover Restriction List, the NSSAI, and {NH,NCC}.

The NG(R)AN 102_2 then checks whether the NSSAI is supported or not (S235). When the UE qualifies for accessing the network slice via the NG(R)AN 102_2, the NG(R)AN 102_2 refreshes the held security key K_{AN} (S236). In other words, the NG(R)AN 102_2 derives the security key K_{AN}* from the security key K_{AN}. Further, the NG(R)AN 102_2 derives, from the security key K_{AN}*, the security key to be used for integrity and encryption related to RRC message and user plane data.

The NG(R)AN 102_2 then sends a Handover Request Ack message to the AMF 104 (S237). Then, the AMF 104 sends a Handover Command message to the NG(R)AN 102_1 (S238). Steps S239 to S241 are substantially the same as Steps S217 to S219 in Fig. 17, and therefore detailed description thereof is omitted.

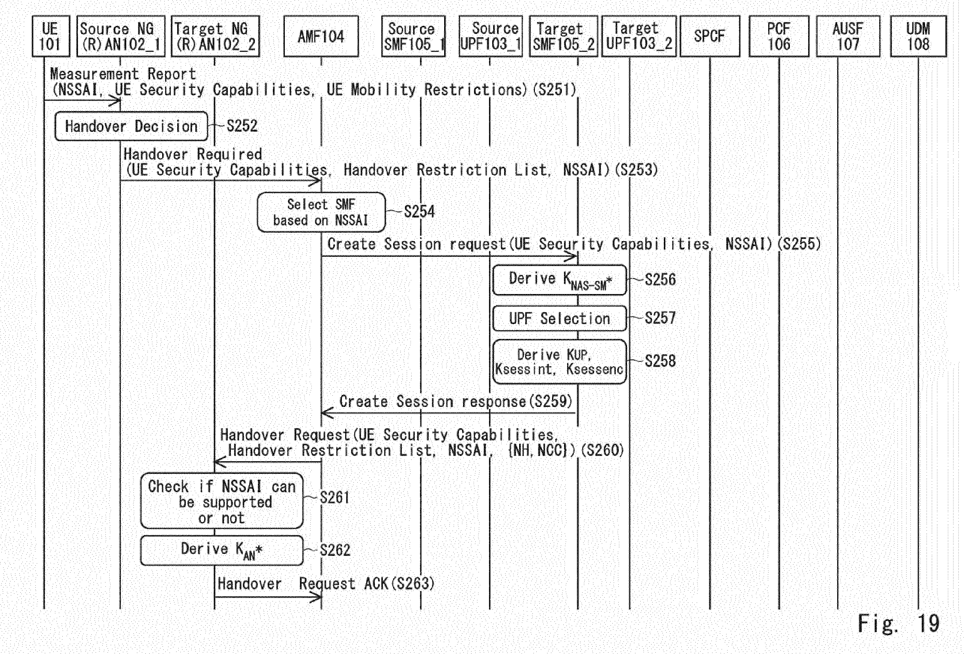

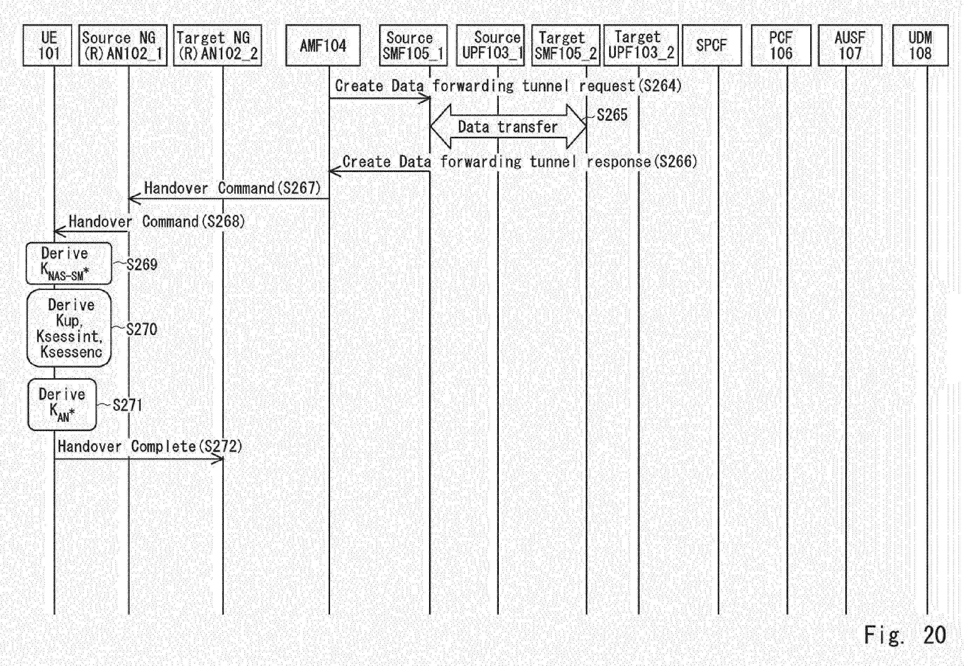

A handover process between the NG(R)AN 102_1 and the NG(R)AN 102_2 (Intra vAMF, Inter vSMF, Inter NG(R)AN handover without Xn interface) is described hereinafter with reference to Figs. 19 and 20. The SMF 105_1 and the UPF 103_1 are SMF (Source SMF) and UPF (Source UPF) that perform processing related to the UE 101 before movement, and the SMF105_2 and the UPF103_2 are SMF (Target SMF) and UPF (Target UPF) that perform processing related to the UE 101 after movement.

Steps S251 to S253 are substantially the same as Steps S231 to S233 in Fig. 18, and therefore detailed description thereof is omitted.

Then, the AMF 104 selects the SMF based on NSSAI (S254). Specifically, the AMF 104 selects the SMF located in the network slice associated with the NSSAI received in Step S253. It is assumed in this example that the AMF 104 selects the SMF 105_2.

The AMF 104 then sends a Create Session Request message to the SMF 105_2 (S255). The Create Session Request message contains the UE Security Capabilities and the NSSAI.

The SMF 105_2 derives the security key K_{NAS-SM}* for NAS signaling protection between the UE 101 and the SMF 105_2 (S256).

The SMF 105_2 then selects the UPF for the slice associated with the NSSAI (S257). The SMF 105_2 then derives the security key K_{UP} and the session key for the slice associated with the NSSAI (S258). The session key may be Ksessint used for integrity and Ksessenc used for encryption, for example. Then, the SMF 105_2 sends a Crease Session response message to the AMF 104 (S259).

Steps S260 to S263 are substantially the same as Steps S234 to S237 in Fig. 18, and therefore detailed description thereof is omitted.

Then, the AMF 104 sends a Create Data forwarding tunnel request message to the SMF 105_1 (S264). The SMF 105_1 creates the tunnel for data transfer to the target SMF, which is the SMF 105_2 (S265). The SMF 105_1 then sends a Create Data forwarding tunnel response message to the AMF 104 (S266).

Then, the AMF 104 sends a Handover Command message to the NG(R)AN 102_1 (S267). The NG(R)AN 102_1 then sends the Handover Command message to the UE 101 (S268).

After that, the UE 101 derives the security key K_{NAS-SM}* by using the parameter sent in the Handover Command message and the like (S269). Then, the security key K_{UP} and the session key are derived from the security key K_{NAS-SM}* (S270). The UE 101 then derives the security key K_{AN}* and further derives the security key to be used for integrity and encryption related to RRC message and user plane data (S271).

Then, the UE 101 sends a Handover Complete message to the NG(R)AN 102_2 (S272).

As described above, during handover, the UE 101 and the SMF 105_2 can derive the new security key K_{NAS-SM}*. In other words, the UE 101 and the SMF 105_2 can refresh the security key K_{NAS-SM}*. It is thereby possible to establish NAS-SM security between the UE 101 and the SMF 105_2.

Further, the NG(R)AN 102_2 checks whether its own device supports the service required by the UE 101 by using the NSSAI sent from the UE 101, and can thereby determine whether to allow handover of the UE 101.

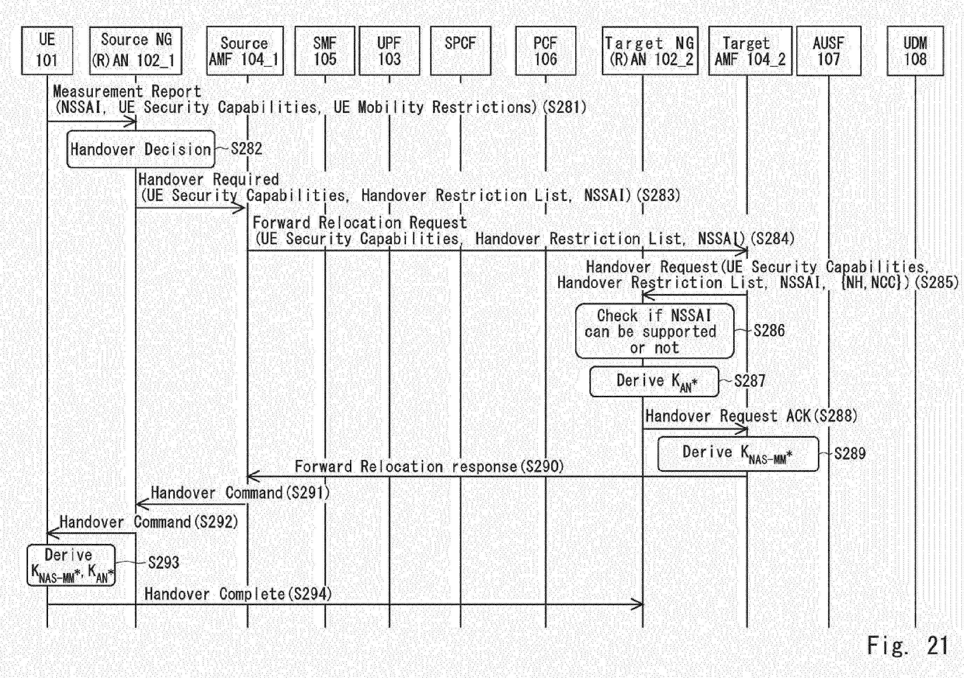

A handover process between an NG(R)AN 102_1 and an NG(R)AN 102_2 (Inter vAMF, Intra SMF, Inter NG(R)AN node without Xn interface) is described hereinafter with reference to Fig. 21. The AMF104_1 is an AMF (Source AMF) that performs processing related to the UE 101 before movement, and the AMF104_2 is an AMF (Target AMF) that performs processing related to the UE 101 after movement.

Steps S281 to S283 are substantially the same as Steps S231 to S233 in Fig. 18, and therefore detailed description thereof is omitted.

Then, the AMF104_1 sends a Forward Relocation Request message to the AMF104_2 (S284). The Forward Relocation Request message contains the UE Security Capabilities, the Handover Restriction List, and the NSSAI.

Steps S285 to S288 are substantially the same as Steps S234 to S237 in Fig. 18, and therefore detailed description thereof is omitted.

Then, the AMF104_2 devices the security key K_{NAS-MM}* (S289). The AMF104_2 then sends a Forward Relocation response message to the AMF104_1 (S290).

Steps S291 to S294 are substantially the same as Steps S238 to S241 in Fig. 18, and therefore detailed description thereof is omitted. Note that, however, in Step S293, the UE 101 derives the security key K_{NAS-MM}* in addition to the security key K_{AN}*.

As described above, during handover, the UE 101 and the AMF 104_2 can derive the new security key K_{NAS-MM}*. In other words, the UE 101 and the AMF 104_2 can refresh the security key K_{NAS-MM}*. It is thereby possible to establish NAS-MM security between the UE 101 and the AMF104_2.

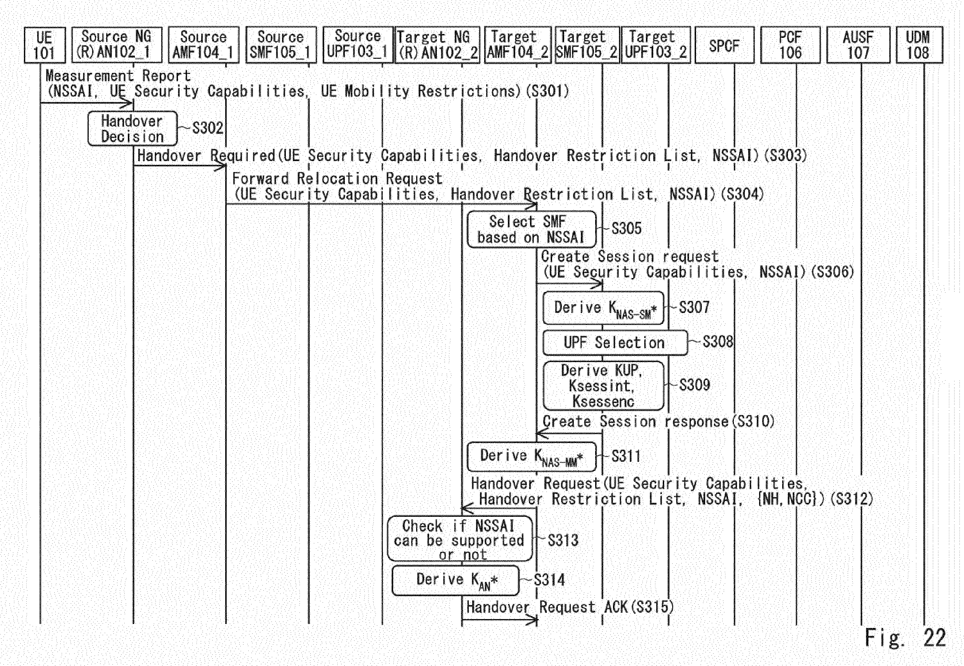

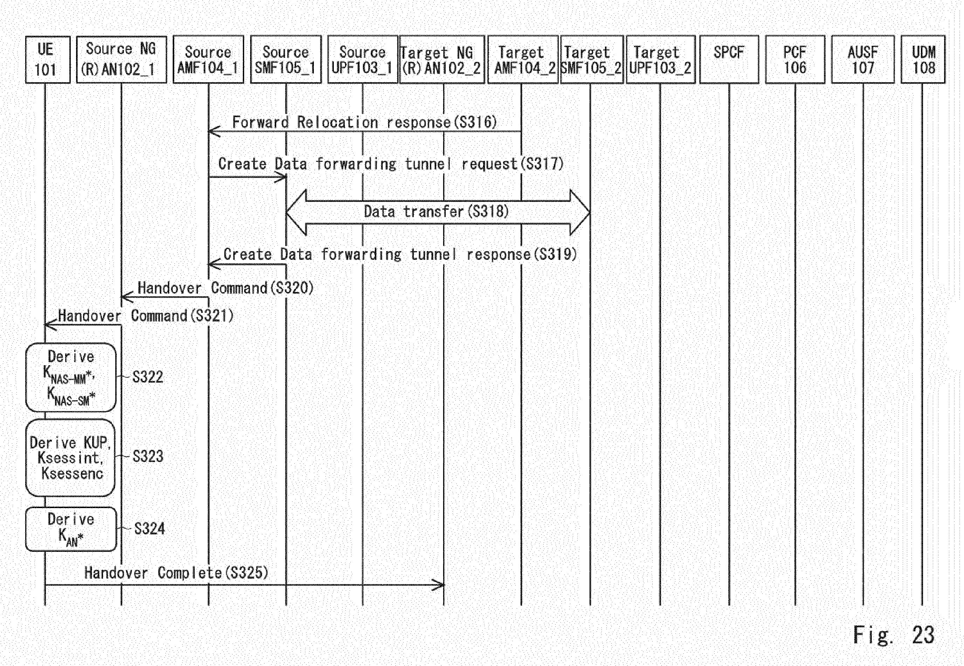

A handover process between the NG(R)AN 102_1 and the NG(R)AN 102_2 (Inter vAMF, Inter vSMF, Inter NG(R)AN node without Xn interface) is described hereinafter with reference to Figs. 22 and 23.

Steps S301 to S304 are substantially the same as Steps S281 to S284 in Fig. 21, and therefore detailed description thereof is omitted. Steps S305 to S310 are substantially the same as Steps S254 to S259 in Fig. 19, and therefore detailed description thereof is omitted.

Then, the AMF104_2 derives the security key K_{NAS-MM}* (S311).

Steps S312 to S315 are substantially the same as Steps S285 to S288 in Fig. 21, and therefore detailed description thereof is omitted.

Then, the AMF104_2 sends a Forward Relocation response message to the AMF104_1 (S316).

Steps S317 to S325 are substantially the same as Steps S264 to S272 in Fig. 20, and therefore detailed description thereof is omitted.

As described above, during handover, the UE 101 and the SMF 105_2 can derive the new security key K_{NAS-SM}*. In other words, the UE 101 and the SMF 105_2 can refresh the security key K_{NAS-SM}*. It is thereby possible to establish NAS-SM security between the UE 101 and the SMF 105_2. Further, the UE 101 and the AMF104_2 can derive the new security key K_{NAS-MM}*. In other words, the UE 101 and the AMF104_2 can refresh the security key K_{NAS-MM}*. It is thereby possible to establish NAS-MM security between the UE 101 and the AMF 104_2.

Further, the NG(R)AN 102_2 checks whether its own device supports the service required by the UE 101 by using the NSSAI sent from the UE 101, and can thereby determine whether to allow handover of the UE 101. In other words, the NG(R)AN 102_2 (Target gNB) can check whether its own device supports the network slice or service required by the UE 101, which is indicated by the received NSSAI.

### Seventh Embodiment

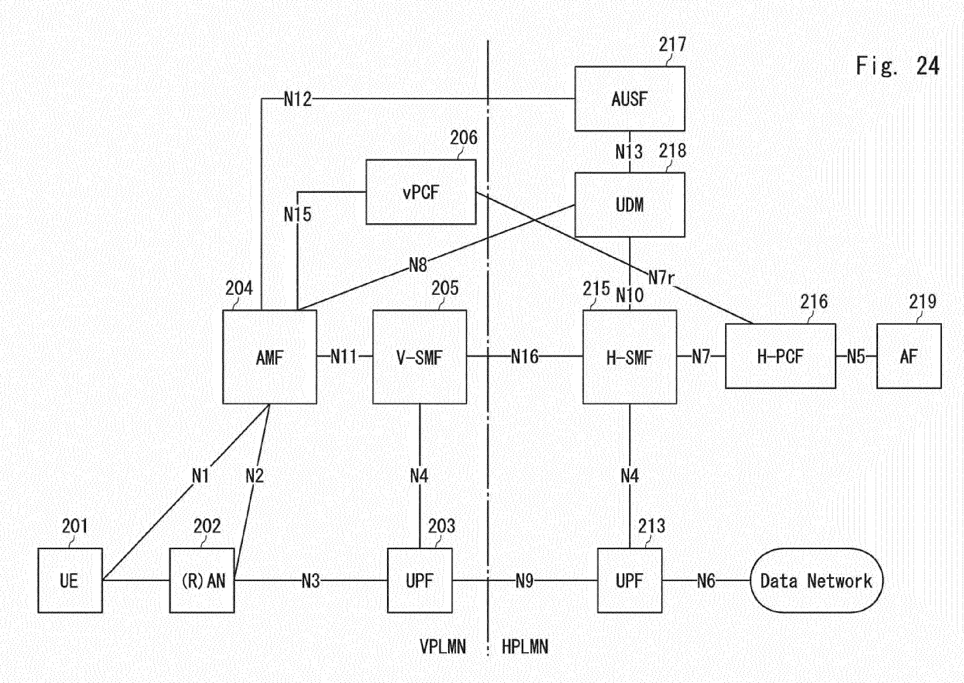

A communication system for achieving roaming of a UE 201 is described hereinafter with reference to Fig. 24. The communication system in Fig. 24 includes a UE 201, a (R)AN 202, a UPF 203, an AMF 204, a V-SMF 205, a vPCF 206, a UPF 213, an H-SMF 215, an H-PCF 216, an AUSF 217, a UDM 218, and an AF 219.

The (R)AN 202, the UPF 203, the AMF 204, the V-SMF 205 and the vPCF 206 are node devices that are located in a VPLMN (Visited Public Land Mobile Network). The UPF 213, the H-SMF 215, the H-PCF 216, the AUSF 217, the UDM 218 and the AF 219 are node devices located in an HPLMN (Home PLMN).

Fig. 24 shows the state where the UE 201 is roaming in the VPLMN. The registration procedure and security establishment when the UE 201 is roaming is described hereinafter.

First, the UE 201 sends an RRC Connection request message to the (R)AN 202 located in the VPLMN. When the UE 201 has information about RAT restrictions, it adds the RAT restrictions to an attach request message, and multiplexes the attach request message onto the RRC Connection request message.

Next, the (R)AN 202 forwards the attach request message to the AMF 204 located in the VPLMN. The AMF 204 checks the RAT restrictions of the UE 201. In order to check the RAT restrictions of the UE 201, the AMF 204 may request the UDM 218 to send information about the RAT restrictions of the UE 201. Specifically, the AMF 204 may download Subscription information of the UE 201 from the UDM 218.

When the AMF 204 determines that there are restrictions on RAT to be used by the UE 201 with the (R)AN 202, the (R)AN 202 notifies the UE 201 that it needs to establish RRC connection with another (R)AN. When, on the other hand, the AMF 204 determines that there are no restrictions on RAT to be used by the UE 201 with the (R)AN 202, the AMF 204 checks whether the area where the UE 201 is located is a forbidden zone or not.

When the AMF 204 determines that the area where the UE 201 is located is a forbidden zone, it sends, to the (R)AN 202, a message rejecting the connection. When, on the other hand, the AMF 204 determines that the area where the UE 201 is located is not a forbidden zone, it contacts the AUSF 217 located in the HPLMN in order to perform authentication related to the UE 201.

In the authentication related to the UE 201, when there is security context related to the UE 201, the UE 201 sends eKSI (evolved Key Set Identifier) seaf to the AMF 204. The AMF 204 checks the validity of security context. When, on the other hand, there is no security context related to the UE 201, AKA (Authentication Key Agreement) is performed. As a result of performing authentication related to the UE 201, NAS-MM Security between the UE 201 and the AMF 204 located in the VPLMN is established. Further, security between the UE 201 and the (R)AN 202 is established. The AMF 204 contacts the H-PCF 216 via the vPCF 206 regarding security algorithms.

When the UE 201 is located in a non-allowed area where communication is not allowed, it cannot initiate service requests. On the other hand, when the UE 201 is located in an allowed area where communication is allowed, it can initiate service requests.

Security establishment during service request processing is described hereinafter. First, the UE 201 sends a service request (or service attach request) message containing S-NSSAI to the AMF 204. The AMF 204 then selects an SMF based on the S-NSSAI and Subscription information of the UE 201. It is assumed in this example that the AMF 204 selects the V-SMF 205. NAS-SM Security is thereby established between the UE 201 and the V-SMF 205.

The secure tunnel where security is established exists between the V-SMF 205 and the H-SMF 215. The V-SMF 205 contacts the H-PCF 216 via the vPCF 206 regarding security algorithms.

Then, the V-SMF 205 selects a UPF that is suitable for the network slice to which the UE 201 desires to connect. It is assumed in this example that the V-SMF 205 selects the UPF 203.

The V-SMF 205 then derives the security key K_{UP} for the UPF 203. Further, the V-SMF 205 requests security algorithms to the H-PCF 216 via the vPCF 206. The V-SMF 205 further derives the session key. The V-SMF 205 then initiates UP(User Plane) SMC(Security Mode Command) processing.

In the communication system of Fig. 24, the UE 201 is provided with services via the PDN (Packed Data Network) in the HPLMN.

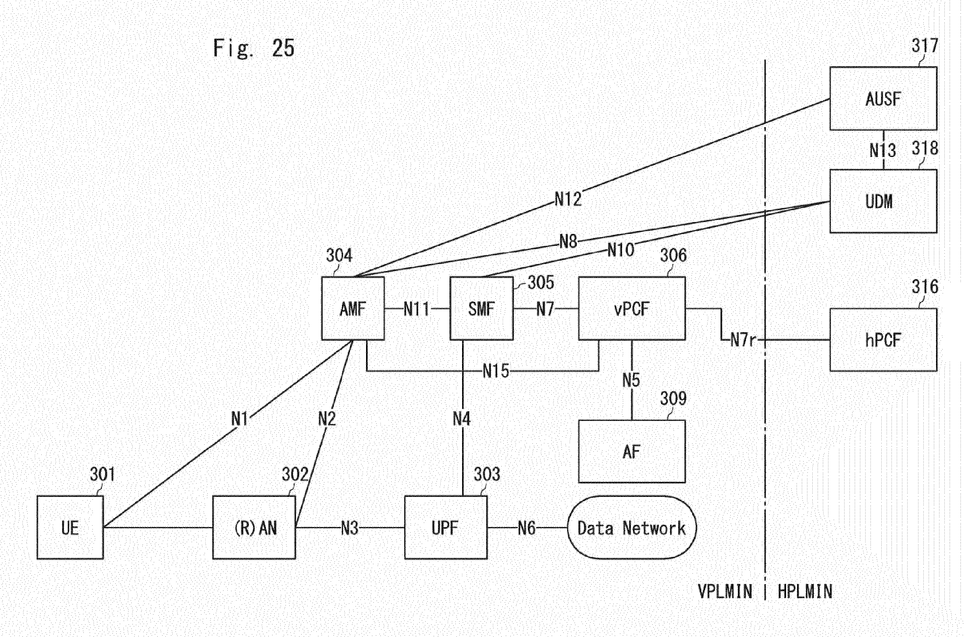

A communication system for achieving roaming of a UE 201, which is different from that shown in Fig. 24, is described hereinafter with reference to Fig. 25. The communication system in Fig. 25 includes a UE301, a (R)AN 302, an UPF, 303, an AMF 304, an SMF 305, a vPCF 306, an AF 309, an H-PCF 316, an AUSF 317, and an UDM 318. The (R)AN 302, the UPF, 303, the AMF 304, the SMF 305, the vPCF 306 and the AF 309 are node devices located in the VPLMN. The H-PCF 316, the AUSF 317 and the UDM 318 are node devices located in the HPLMN.

Fig. 25 shows the state where the UE 201 is roaming in the VPLMN. In the communication system of Fig. 25, the UE 301 is provided with services via the PDN (Packed Data Network) in the VPLMN.

Although the present disclosure is described as a hardware configuration in the above embodiments, it is not limited thereto. The present disclosure may be implemented by causing a CPU (Central Processing Unit) to execute a computer program to perform processing in the UE and each device.

In the above-described examples, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD ReWritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

It should be noted that the present invention is not limited to the above-described embodiments and may be varied in many ways within the scope of the present invention. Further, in this disclosure, embodiments can be combined as appropriate.

While the invention has been particularly shown and described with reference to embodiments thereof, the invention is not limited to these embodiments. It will be understood by those of ordinary skill in the art that various changes in form and details may be made therein without departing from the scope of the present invention as defined by the claims.

### Reference Signs List

- 10: BASE STATION
- 12: BASE STATION
- 20: COMMUNICATION TERMINAL
- 41: ARPF
- 43: SEAF
- 44: SCMF
- 45: SCMF
- 46: CP-CN
- 47: CP-CN
- 48: CP-CN
- 49: CP-CN
- 50: CP-CN
- 51: NG-RAN
- 52: NG-RAN
- 53: NG-RAN
- 54: NG-RAN
- 55: NG-RAN
- 56: NG-RAN
- 57: NG-RAN
- 58: NG-RAN
- 101: UE
- 102: NG(R)AN
- 103: UPF
- 104: AMF
- 105: SMF
- 106: PCF
- 107: AUSF
- 108: UDM
- 109: DN
- 110: AF
- 201: UE
- 202: (R)AN
- 203: UPF
- 204: AMF
- 205: V-SMF
- 206: vPCF
- 213: UPF
- 215: H-SMF
- 216: H-PCF
- 217: AUSF
- 218: UDM
- 219: AF
- 301: UE
- 302: (R)AN
- 303: UPF
- 304: AMF
- 305: SMF
- 306: vPCF
- 309: AF
- 316: H-PCF
- 317: AUSF
- 318: UDM

## Claims

1. A source core network node (47) comprising a processor configured to:
receive a handover required message from a radio access network node (51);
derive a key during handover procedure of a terminal from the source core network node (47) to a target core network (48) node after receiving the handover required message; and
transfer UE Security Capabilities of the terminal and the key to the target core network node (48) during the handover procedure so that a new NAS security context is established and Security Mode Command, SMC, procedure is initiated.

2. A terminal (101) comprising a processor configured to:
derive a key during handover procedure of the terminal from a source core network node (47) to a target core network node (48); and
establish a new NAS security context,
wherein the source core network node (47) receives a handover required message from a radio access network node (51), derives the key during the handover procedure after receiving the handover required message, and transfers UE Security Capabilities of the terminal and the key to the target core network node (48) during the handover procedure so that the new NAS security context is established and Security Mode Command, SMC, procedure is initiated.

3. A method comprising:
receiving, by source core network node (47), a handover required message from a radio access network node (51);
deriving, by the source core network node (47), a key during handover procedure of a terminal from the source core network node (47) to a target core network node (48) after receiving the handover required message; and
transferring, by the source core network node (47), UE Security Capabilities of the terminal and the key to the target core network node (48) during the handover procedure so that a new NAS security context is established and Security Mode Command, SMC, procedure is initiated.

4. A method comprising:
deriving, by a terminal (101), a key during handover procedure of the terminal from a source core network node (47) to a target core network node (48); and
establishing, by the terminal (101), a new NAS security context,
wherein the source core network node (47) receives a handover required message from a radio access network node (51), derives the key during the handover procedure after receiving the handover required message, and transfers UE Security Capabilities of the terminal and the key to the target core network node during the handover procedure so that the new NAS security context is established and Security Mode Command, SMC, procedure is initiated.

## Patentansprüche

1. Quellkernnetzwerkknoten (47) mit einem Prozessor, der so konfiguriert ist, dass er:
eine Handover-Required-Message von einem Funkzugangsnetzwerkknoten (51) empfängt;
einen Schlüssel während einer Handover-Prozedur eines Endgeräts vom Quellkernnetzwerkknoten (47) zu einem Zielkernnetz- (48) Knoten nach Empfangen der Handover-Required-Message ableitet; und
UE Security Capabilities des Endgeräts und den Schlüssel zum Zielkernnetzwerkknoten (48) während der Handover-Prozedur transferiert, so dass ein neuer NAS-Sicherheitskontext etabliert und eine Security-Mode-Command-, SMC, Prozedur initiiert wird.

2. Endgerät (101) mit einem Prozessor, der so konfiguriert ist, dass er:
einen Schlüssel während einer Handover-Prozedur des Endgeräts von einem Quellkernnetzwerkknoten (47) zu einem Zielkernnetzwerkknoten (48) ableitet; und einen neuen NAS-Sicherheitskontext etabliert,
wobei der Quellkernnetzwerkknoten (47) eine Handover-Required-Message von einem Funkzugangsnetzwerkknoten (51) empfängt, den Schlüssel während der Handover-Prozedur nach Empfangen der Handover-Required-Message ableitet und UE Security Capabilities des Endgeräts und den Schlüssel zum Zielkernnetzwerkknoten (48) während der Handover-Prozedur transferiert, so das s der neue NAS-Sicherheitskontext etabliert und eine Security-Mode-Command-, SMC, Prozedur initiiert wird.

3. Verfahren, das aufweist:
durch einen Quellkernnetzwerkknoten (47) erfolgendes Empfangen einer Handover-Required-Message von einem Funkzugangsnetzwerkknoten (51);
durch den Quellkernnetzwerkknoten (47) erfolgendes Ableiten eines Schlüssels während einer Handover-Prozedur eines Endgeräts vom Quellkernnetzwerkknoten (47) zu einem Zielkernnetzwerkknoten (48) nach Empfangen der Handover-Required-Message; und
durch den Quellkernnetzwerkknoten (47) erfolgendes Transferieren von UE Security Capabilities des Endgeräts und des Schlüssels zum Zielkernnetzwerkknoten (48) während der Handover-Prozedur, so dass ein neuer NAS-Sicherheitskontext etabliert und eine Security-Mode-Command-, SMC, Prozedur initiiert wird.

4. Verfahren, das aufweist:
durch ein Endgerät (101) erfolgendes Ableiten eines Schlüssels während einer Handover-Prozedur des Endgeräts von einem Quellkernnetzwerkknoten (47) zu einem Zielkernnetzwerkknoten (48); und
durch das Endgerät (101) erfolgendes Etablieren eines neuen NAS-Sicherheitskontextes,
wobei der Quellkernnetzwerkknoten (47) eine Handover-Required-Message von einem Funkzugangsnetzwerkknoten (51) empfängt, den Schlüssel während der Handover-Prozedur nach Empfangen der Handover-Required-Message ableitet und UE Security Capabilities des Endgeräts und den Schlüssel zum Zielkernnetzwerkknoten während der Handover-Prozedur transferiert, so dass der neue NAS-Sicherheitskontext etabliert und eine Security-Mode-Command-, SMC, Prozedur initiiert wird.

## Revendications

1. Nœud de réseau cœur source (47) comprenant un processeur configuré pour :
recevoir un message de transfert requis en provenance d'un nœud de réseau d'accès radio (51) ;
dériver une clé pendant une procédure de transfert d'un terminal du nœud de réseau cœur source (47) à un nœud de réseau cœur cible (48) après la réception du message de transfert requis ; et
transférer des capacités de sécurité d'UE du terminal et la clé au nœud de réseau cœur cible (48) pendant la procédure de transfert de sorte qu'un nouveau contexte de sécurité NAS soit établi et qu'une procédure de commande de mode de sécurité, SMC, soit lancée.

2. Terminal (101) comprenant un processeur configuré pour :
dériver une clé pendant une procédure de transfert du terminal d'un nœud de réseau cœur source (47) à un nœud de réseau cœur cible (48) ; et
établir un nouveau contexte de sécurité NAS,
dans lequel le nœud de réseau cœur source (47) reçoit un message de transfert requis en provenance d'un nœud de réseau d'accès radio (51), dérive la clé pendant la procédure de transfert après la réception du message de transfert requis, et transfère des capacités de sécurité d'UE du terminal et la clé au nœud de réseau cœur cible (48) pendant la procédure de transfert de sorte que le nouveau contexte de sécurité NAS soit établi et qu'une procédure de commande de mode de sécurité, SMC, soit lancée.

3. Procédé comprenant :
la réception, par un nœud de réseau cœur source (47), d'un message de transfert requis en provenance d'un nœud de réseau d'accès radio (51) ;
la dérivation, par le nœud de réseau cœur source (47), d'une clé pendant une procédure de transfert d'un terminal du nœud de réseau cœur source (47) à un nœud de réseau cœur cible (48) après la réception du message de transfert requis ; et
le transfert, par le nœud de réseau cœur source (47), de capacités de sécurité d'UE du terminal et de la clé au nœud de réseau cœur cible (48) pendant la procédure de transfert de sorte qu'un nouveau contexte de sécurité NAS soit établi et qu'une procédure de commande de mode de sécurité, SMC, soit lancée.

4. Procédé comprenant :
la dérivation, par un terminal (101), d'une clé pendant une procédure de transfert du terminal d'un nœud de réseau cœur source (47) à un nœud de réseau cœur cible (48) ; et
l'établissement, par le terminal (101), d'un nouveau contexte de sécurité NAS,
dans lequel le nœud de réseau cœur source (47) reçoit un message de transfert requis en provenance d'un nœud de réseau d'accès radio (51), dérive la clé pendant la procédure de transfert après la réception du message de transfert requis, et transfère des capacités de sécurité d'UE du terminal et la clé au nœud de réseau cœur cible pendant la procédure de transfert de sorte que le nouveau contexte de sécurité NAS soit établi et qu'une procédure de commande de mode de sécurité, SMC, soit lancée.
